(19) Europäisches Patentamt
European Patent Office
Office européen des brevets

(11) Veröffentlichungsnummer: **0 097 118**
**A2**

# (12) EUROPÄISCHE PATENTANMELDUNG

(21) Anmeldenummer: **83810240.8**

(22) Anmeldetag: **06.06.83**

(51) Int. Cl.³: **C 07 C 87/62**, C 10 M 3/28, C 08 K 5/18

(30) Priorität: **10.06.82 CH 3592/82**

(43) Veröffentlichungstag der Anmeldung: **28.12.83**
**Patentblatt 83/52**

(84) Benannte Vertragsstaaten: **DE FR GB IT**

(71) Anmelder: **CIBA-GEIGY AG, Patentabteilung Postfach, CH-4002 Basel (CH)**

(72) Erfinder: **Evans, Samuel, Dr., 17, Route des Charbonnières, CH-1723 Marly (CH)**

## (54) Flüssige Antioxidantien für Schmierstoffe und Elastomere.

(57) Neue verzweigt alkylierte Diphenylamine der Formel I sowie deren Gemische

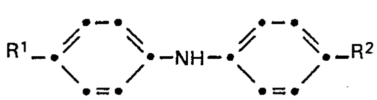 ,

worin $R^1$ verzweigtes Dodecyl und $R^2$ Wasserstoff oder verzweigtes $C_3$-$C_{12}$ Alkyl bedeuten, zeigen eine ausgezeichnete Antioxidationswirkung in Schmierstoffen und Elastomeren.

Ein Herstellungsverfahren wird ebenfalls beschrieben.

EP 0 097 118 A2

ACTORUM AG

CIBA-GEIGY AG
Basel (Schweiz)

3-13950/+

Flüssige Antioxidantien für Schmierstoffe und Elastomere

Die vorliegende Erfindung betrifft neue verzweigt alkylierte Diphenylamine, ihre Herstellung und ihre Verwendung als Additive in Schmierstoffen und Elastomeren.

Mineralischen und synthetischen Schmierölen und -fetten sowie Elastomeren werden im allgemeinen verschiedene Zusatzstoffe zur Verbesserung ihrer Gebrauchseigenschaften beigegeben. Insbesondere besteht ein Bedarf an Additiven, welche die Oxidation bzw. Alterung des Schmierstoffes und Elastomeren wirksam inhibieren und somit deren Lebensdauer beträchtlich erhöhen.

In der CA-PS 905 925 sind bereits alkylierte Diarylamine als Schmierstoffzusätze beschrieben worden, so beispielsweise das di-(para-n-dodecylphenyl)-amin.

Es wurde nun gefunden, dass bestimmte, verzweigt alkylierte Diphenylamine in Schmierstoffen und in Elastomeren eine ausgezeichnete Antioxidationswirkung entfalten.

Die vorliegende Erfindung betrifft somit neue mono- und dialkylierte Diphenylamine der Formel I sowie deren Gemische

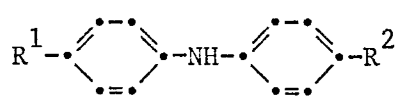

(I),

worin

$R^1$ verzweigtes Dodecyl und

$R^2$ Wasserstoff oder verzweigtes $C_3$-$C_{12}$ Alkyl bedeuten

Bedeutet $R^2$ verzweigtes $C_3$-$C_{12}$ Alkyl, so handelt es sich beispielsweise um Isopropyl, sec.-Butyl, tert.-Butyl, tert.-Pentyl, 2-Methylpentyl-(2), 2,4,4-Trimethylpentyl-(2), 4,6-Dimethylheptyl-(2), 4,6,8-Trimethylnonyl-(2) sowie verzweigte Isomere der Decyl-, Undecyl- und Dodecylreihe.

Besonders bevorzugt sind Diphenylamine der Formel I sowie deren Gemische, worin $R^2$ Wasserstoff oder verzweigtes Butyl, Octyl, Nonyl und insbesonders Dodecyl herstellt.

Bei den erfindungsgemässen Diphenylaminen der Formel I bestehen die Reste $R^1$ und $R^2$, insbesondere bei den langkettigen Alkylsubstituenten, aus mehreren Isomeren. Beispiele für $R^1$ und $R^2$ als Dodecyl sind:

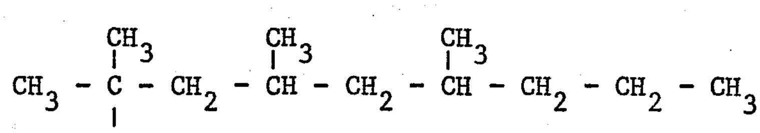

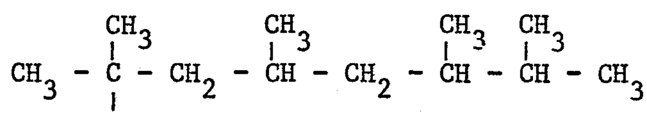

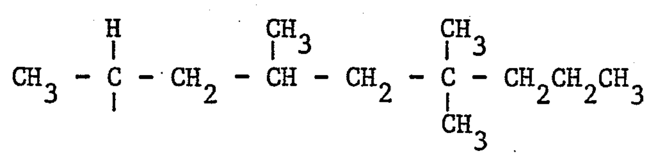

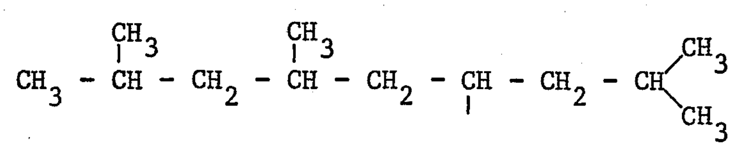

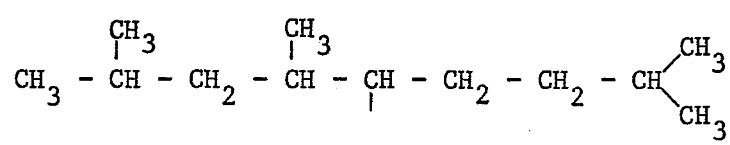

und ähnliche Strukturen.

Besonders bevorzugt sind Gemische der mono- und dialkylierten Diphenylamine der Formel I, enthaltend etwa 10 bis 90 Gew.-prozent der Mono- bzw. 90 bis 10 Gew.-prozent der Dialkylverbindungen der Formel I.

Weiterer Gegenstand der Erfindung ist ein Verfahren zur Herstellung der Verbindungen der Formel I sowie deren Gemische, dadurch gekennzeichnet, dass man Diphenylamin mit Dodecen und anschliessend mit $C_3$-$C_{12}$ Alken in Gegenwart eines Friedel-Crafts-Katalysators oder einer Säure umsetzt.

Es ist vorteilhaft, einen mindestens zwei- bis dreifachen molaren Ueberschuss des Dodecens bzw. des $C_3$-$C_{12}$ Alkens einzusetzen, um eine bis zwei Alkylgruppen in das Diphenylaminmolekül einführen zu können. Die Isomere der eingesetzten Alkene sind nämlich nicht alle in der Lage, in der vorstehend beschriebenen Weise Diphenylamin zu alkylieren, so dass stets ein Ueberschuss an Dodecen bzw. Alken eingesetzt wird.

Die Ausgangsprodukte $C_3$-$C_{12}$-Alken stellen bekannte Zwischenprodukte dar. Beispiele dafür sind Propen, 1-Buten, Isobuten, 1-Penten, 2,4,4-Trimethyl-1-penten, 1-Hexen, 2-Hexen, 1-Hepten, 1-Octen, 1-Nonen, 1-Decen und 1-Dodecen. Mischungen von Isomeren derartiger Alkene können auch eingesetzt werden.

Besonders bevorzugt als Ausgangsprodukt ist Dodecen, das als trivialer Name Propylentetramer bekannt ist. Es stellt ein technisches Produkt dar, welches aus mehreren Isomeren besteht, so beispielsweise:

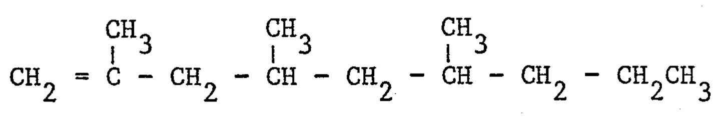

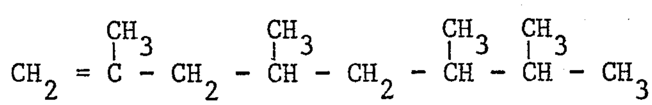

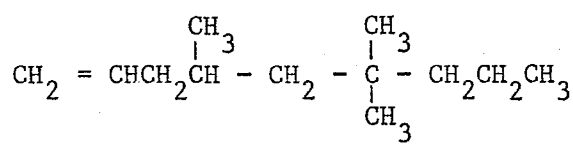

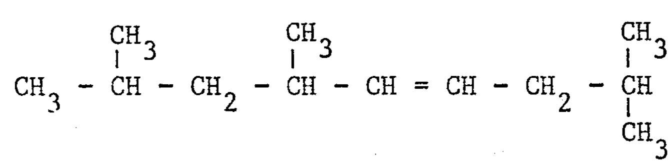

sowie ähnliche Strukturen.

Die Reaktion kann in einem Temperaturbereich von 20°C bis zu 300°C, vorzugsweise zwischen 110° und 190°C, gegebenenfalls unter inerter Gas-Atmosphäre wie Stickstoff, durchgeführt werden.

Die Reaktionszeit richtet sich nach der Reaktionsfreudigkeit der eingesetzten Alkene sowie nach der Reaktionstemperatur. Sie kann beispielsweise eine bis mehrere Stunden betragen. Die Reaktion kann auch bei erhöhtem Druck, beispielsweise Drücken von 1 bis 5 bar, durchgeführt werden.

Geeignete Friedel-Crafts-Katalysatoren sind beispielsweise $AlCl_3$, $SbCl_3$, $FeCl_3$, $SnCl_4$, $BF_3$, $ZnCl_2$ oder $CaCl_2$.

Geeignete Säuren als Katalysatoren sind beispielsweise Mineralsäuren wie Schwefelsäure oder Phosphorsäure, Sulfonsäuren wie Methansulfonsäure oder Toluolsulfonsäure wie organische oder anorganische polymere Säuren.

Beispiele für saure organische polymere Katalysatoren sind Ionenaustauscher auf organischer Basis, insbesondere solche mit einem Styrol-Divinylbenzol-Copolymeren als Matrix. Produkte dieses Typus sind beispielsweise im Handel unter der Bezeichnung "Amberlyst® 15", "Amberlite® 200" bzw. "Lewatit® SP 120" erhältlich. Beispiele für geeignete anorganische polymere Katalysatoren sind saure Erden, insbesondere solche auf Aluminiumsilikat-Basis wie Fulkat® 22, Tonsil® L80 S oder Fulmont® 237.

Das erfindungsgemässe Verfahren wird vorzugsweise ohne organische Lösungsmittel durchgeführt. Es kann aber auch in Gegenwart eines inerten organischen Lösungsmittels gearbeitet werden. Geeignete inerte Lösungsmittel dafür sind beispielsweise Hexan, Methylen- oder Aethylenchlorid, Nitrobenzol, Dichlorbenzol oder Schwefelkohlenstoff.

Falls erwünscht kann das Reaktionsprodukt in üblicher Weise gereinigt werden.

Die so hergestellten Verbindungen der Formel I sowie deren Gemische enthalten mindestens eine verzweigte Dodecylkette, welche sich durch verschiedenartige Verzweigungen auszeichnet.

Weiterer Gegenstand der Erfindung sind auch Stoffzusammensetzungen enthaltend eine Verbindung der Formel I oder Gemische davon und einen mineralischen und/oder synthetischen Schmierstoff oder ein Elastomer, sowie die Verwendung der Verbindungen der Formel I als Zusätze in Schmierstoffen und Elastomeren.

Die Verbindungen der Formel I sowie deren Gemische können in Schmierstoffen und Elastomeren in Konzentrationen von 0,05-10 Gew.%, bezogen auf das zu stabilisierende Material, eingesetzt werden. Bevorzugte Konzentrationen sind 0,05-5 Gew.% und insbesondere 0,1-2,5 Gew.%.

Auf diese Weise ausgerüstete mineralische und synthetische Schmieröle, Schmierfette, hydraulische Flüssigkeiten und Elastomere zeigen ausgezeichnete Antioxidationseigenschaften, die durch stark reduzierte Alterungserscheinungen der zu schützenden Teile deutlich werden. Besonders wirksam sind die Verbindungen der Formel I sowie deren Gemische in Schmierölen, worin sie eine ausgezeichnete Antioxidations- und Antikorrosionswirkung ohne Säure- oder Schlammbildung zeigen.

Die in Frage kommenden Schmierstoffe sind dem Fachmann geläufig und z.B. im "Schmiermittel Taschenbuch" (Hüthig Verlag, Heidelberg, 1974) beschrieben. Besonders geeignet sind z.B. Poly-α-olefine, Schmierstoffe auf Esterbasis, Phosphate, Glykole, Polyglykole und Polyalkylenglykole.

Die in Frage kommenden Elastomeren sind dem Fachmann geläufig. Besonders geeignet sind die Natur- und Synthesekautschuke, beispielsweise Polymere des Butadiens sowie dessen Mischpolymerisate mit Styrol oder Acrylonitril, sowie Isopren- oder Chloropren-Polymere.

Der Schmierstoff kann zusätzlich andere Co-Additive enthalten, die zugegeben werden, um die Eigenschaften zu verbessern, wie Antioxidantien, Metallpassivatoren, Rostinhibitoren, Viskositätsindex-Verbesserer/Fliesspunktserniedriger, Dispergiermittel/Detergentien und andere Extrem-Druck/Antiabnutzungs-Additive.

Beispiele für Antioxidantien sind:

(a) Alkylierte und nicht-alkylierte aromatische Amine und Mischungen davon, z.B.: Dioctylphenylamin, (1,1,3,3-Tetramethylbutyl-phenyl-α- und -β-naphthylamine, Phenothiazin, Dioctylphenothiazin, Phenyl-α-napthylamin, N,N'-Di-sec.butyl-p-phenylendiamin.

(b) Gehinderte Phenole, z.B. 2,6-Di-tert.-butyl-p-cresol, 4,4'-Bis-(2,6-diisopropylphenol), 2,4,6-Triisopropylphenol, 2,2'-Thio-bis-(4-methyl-6-tert.-butyl-phenol), 4,4'-Methylen-bis-(2,6-di-tert.-butyl phenol).

(c) Alkyl-, Aryl- oder Alkaryl-phosphite, z.B.: Trinonylphosphit, Triphenylphosphit, Diphenyldecylphosphit oder Tris-(2,4-Di-tert.-butylphenyl)-phosphit.

(d) Ester von Thiodipropionsäure oder Thiodiessigsäure, z.B.: Dilauroylthiodipropionat oder Dioctylthiodiacetat.

(e) Salze von Carbamin- und Dithiophosphorsäuren, z.B.: Antimondiamyldithiocarbamat, Zinkdiamyldithiophosphat.

(f) Metallsalze und Metallkomplexe von organischen Chelatbildnern, z.B.: Kupfer-bis-trifluoracetylacetonat, Kupfer-phthalocyanine, Tributylester von Aethylendiamin-tetra-essigsäuremononatriumsalz.

(g) Frei-Radikal-Antioxidantien, z.B.: Nitroxide.

(h) Kombinationen von zwei oder mehr Antioxidantien der obigen Additive, z.B.: ein alkyliertes Amin und ein gehindertes Phenol.

Beispiele für Metallpassivatoren sind:

(a) für Kupfer, z.B.: 1,2,4-Triazole, Benzotriazol, Tetrahydrobenzotriazol, 2,5-Dimercaptothiadiazol, Salicyliden-propylendiamin, Salze von Salicylaminoguanidin,

(b) für Magnesium, z.B.: Pyridylamine,

(c) für Blei, z.B.: Sebacinsäure, Chinizarin, Propylgallat,

(d) Kombination von zwei oder mehr der obigen Additive.

Beispiele für Rost-Inhibitoren sind:

(a) Organische Säuren, ihre Ester, Metallsalze und Anhydride sind z.B.: N-Oleoyl-sarcosin, Sorbitan-mono-oleat, Bleinaphthenat, Dodecenylbernsteinsäure-anhydrid.

(b) Stickstoffhaltige Verbindungen, z.B.:

I. primäre, sekundäre oder tertiäre aliphatische oder cycloaliphatische Amine und Amin-Salze von organischen und anorganischen Säuren, z.B. öllösliche Alkylammoniumcarboxylate.

II. Heterocyclische Verbindungen, z.B.: Imidazoline, Oxazoline.

(c) Phosphorhaltige Verbindungen, z.B.: Aminsalze von Phosphorsäurepartialestern,

(d) Schwefelhaltige Verbindungen, z.B. Barium-dinonylnaphthalinsulfonate, Calciumpetroleumsulfonate,

(e) Kombinationen von zwei oder mehr der obigen Additive.

Beispiele für Viskositäts-Index-Verbesserer/Fliesspunktserniedriger sind z.B.: Polymethacrylate, Polybutene, Olefin-Copolymere, Polyvinylpyrrolidon, Polymethacrylat-Copolymere oder Styrol/Acrylat-Copolymere.

Beispiele für Dispergiermittel/Detergentien sind z.B.: Metallsulfonate (Ca, Ba, Mg) und -phenolate, Polybutenyl-succinimide.

Beispiele für Extremdruck/Verschleissschutz-Additive sind: Schwefel und/oder Phosphor und/oder Halogen enthaltende Verbindungen, z.B.: Zink-dialkyl-dithiophosphate, Tritolyl-phosphat, chlorierte Paraffine, Alkyl- und Aryldisulfide.

Die erwähnten Zusätze stellen keine Beschränkung dar, sondern sollen lediglich eine beispielhafte Ausführungsform der Erfindung darstellen.

Auch das Elastomer kann andere zusätzliche Co-Additive enthalten, die zur Verbesserung der Eigenschaften zugegeben werden, wie Antioxidantien, Gleitmittel, Dispergiermittel oder sonstige Zusätze, die dem Fachmann geläufig sind.

Die Herstellung der in den Schmierstoffen und Elastomeren als Antioxidationsmittel zu verwendenden Verbindungen, sowie die Verwendung und Wirkung der erfindungsgemässen Schmierstoff- und Elastomeren-Zusammensetzungen werden in den folgenden Beispielen näher beschrieben. Hierin bedeuten Teile Gewichtsteile und Prozente Gewichtsprozente.

Beispiel 1: 169,3 Teile Diphenylamin und 3 Teile Aluminiumchlorid werden vorgelegt und auf eine innere Temperatur von 120°C gebracht. Zu dieser Schmelze werden dann unter Rühren 505 Teile Tetrapropylen innerhalb von 3 1/2 Stunden langsam zugetropft. Nach weiterem 3-stündigem Heizen bei 125°C unter $N_2$-Atmosphäre wird der Katalysator abfiltriert, das Reaktionsgemisch gut mit Wasser gewaschen, und anschliessend das überschüssige Tetrapropylen unter Vakuum abdestilliert.

Man erhält 360,9 Teile eines leichtgrünen Oels, bestehend aus einem Gemisch, das N,N-Di-(paradodecylphenyl)-amin und als Hauptkomponente N-para-Dodecylphenyl-N-phenylamin enthält.
Analysedaten: Mass-Spektrum $M^+$ 337 [N-(Dodecylphenyl)-N-phenylamin]; $M^+$ 505 [N,N-Di-(dodecylphenyl)amin]. Auf Grund der $^{13}C$-chemischen Verschiebungen liegt N-p-Dodecylphenyl-N-phenylamin als Hauptkomponente vor.

Beispiel 2: Oel Oxidationstest, Standard Version nach ASTM 2272 (Rotary Bomb Oxidation-Test).

Das gemäss Beispiel 1 hergestellte Gemisch wird gemäss ASTM 2272 in Mineralöl Vitrea® 100 (ODX) Shell [Viskosität 10,6 $mm^2/s$ (100°C)] getestet. Der Versuch ist bei einem Druckabfall von 172,4 KPa (25 psi) beendet. Die in der untenstehenden Tabelle angegebenen Resultate bedeuten die Zeit (in Minuten) bis der angegebene Druckabfall eingetreten ist. Lange Zeiten entsprechen guter Stabilisatorwirksamkeit. Konzentration des Stabilisators: 0,5 Gew.%, bezogen auf das Oel.

| Stabilisator | Minuten bis Druckabfall von 172,4 KPa |
|---|---|
| keiner | 29 |
| Gemisch gemäss Beispiel 1 | 222 |

Beispiel 3: Oel Oxidationstest nach IP 280, "CIGRE" (modifizierte, beschleunigte Methode IP 280)

Modifizierte Version mit löslichem Cu- und Fe-Katalysator.
Bedingungen: 4 Stunden Sauerstoff einleiten bei 150°C (4 Liter $O_2$/h).
Bestimmung der Säurezahl nach Testende.
Tabellenwert: mg KOH-Verbrauch pro g Testöl.
Stabilisatorkonzentration: 0,5 Gew.%, bezogen auf das Oel.
Testöl: Shell Rotary Vakuum Oil (Viskosität 11 cSt./100°C).

Tabelle 2

| Stabilisator | mg KOH/g Testöl |
|---|---|
| keiner | 2,5 |
| Gemisch gemäss Beispiel 1 | 0,84 |

Beispiel 4: TOST-Test, Oxidation Charakteristika von Vitrea 27-Oil (ASTM D 943/DIN 51587/IP 157).

Das zu testende Oel wurde in Gegenwart von Wasser, Sauerstoff, einem Eisen-kupferkatalysator und dem Stabilisatorgemisch gemäss Beispiel 1 während 1000 Stunden auf 95°C erwärmt. Danach wird der Säurewert (in mg KOH-Verbrauch pro g Testöl) sowie der Schlamm (in mg Rückstand pro Ansatz) bestimmt. Die Resultate sind in Tabelle 3 zusammengestellt.

Die Konzentration des Stabilisator-Gemisches gemäss Beispiel 1 beträgt 2,5 Gew.%, bezogen auf das Oel.

Tabelle 3

| Stabilisator | Oel | 1000 Stunden | |
|---|---|---|---|
| | | Säurewert (mg KOH/g) | Schlamm (mg) |
| Gemisch gemäss Beispiel 1<br>+ 0,05 Gew.% LUBRIZOL® 859<br>+ 0,05 Gew.% REOMET® 38 | Mineralöl I | 0,13 | 56 |
| Gemisch gemäss Beispiel 1<br>+ 0,05 Gew.% LUBRIZOL® 859 | Mineralöl II | 0,47 | 19 |

LUBRIZOL® 859 (Firma Lubrizol) ist ein Eisen-Korrosions-Inhibitor. REOMET® 38 (Ciba-Geigy AG) ist ein Metall-Desaktivator. Mineralöl I enthält 0,4% S, 5% aromatischen Kohlenstoff, 62% paraffinischen Kohlenstoff und 33% naphthalinischen Kohlenstoff. Viskosität (100°C): $5{,}5\ mm^2/sec.$; (40°C): $32{,}9\ mm^2/sec.$; Viskositätsindex: 115.

Mineralöl II enthält 0,5% S, 6,5% aromatischen Kohlenstoff, 71% paraffinischen Kohlenstoff und 22,5% naphthalinischen Kohlenstoff.

Viskosität (100°C): $4{,}8\ mm^2/sec.$
( 40°C): $26{,}2\ mm^2/sec.$
Viskositätsindex: 102.

Beispiel 5: (Prüfung in einem Elastomer)
Ein erfindungsgemässer Stabilisator wird in wenig Aceton gelöst und in einem Latex (Styrol-Butadien-Emulsionspolymer) eingerührt. (Konzentration: 0,2 Gew.-%, bezogen auf den Latexgehalt).

Koagulation: Die obige erhaltene Latex-Lösung wird auf 80°C erwärmt und unter kräftigem Rühren langsam zu 6 Litern auf 75°C vorgewärmtem dest. Wasser, das mit Schwefelsäure auf einem pH-Wert von 2,5 eingestellt wurde, zugetropft. Dabei wird der pH-Wert durch Zugabe eines Koagulationsserums folgender Zusammensetzung konstant gehalten:
400 ml 98%ige Schwefelsäure, 260 Teile Aluminiumsulfat und 10 Liter Wasser.

Nach Beendigung der Zugabe der Latexlösung wird weitere 10 Minuten gerührt, dann der so koagulierte Latex abgeschöpft und 30 Minuten bei 70°C in saurem Wasser (pH 2,5) gerührt (Hydrolysebad) und danach zweimal in warmem dest. Wasser gewaschen. Zum Herauspressen des Wassers wird der Latex durch ein kaltes Walzwerk gepresst und anschliessend im Vakuumtrockenschrank bei 50°C getrocknet.

Prüfung der Alterung
1) Der getrocknete Latex wird zu 10 mm dicken Platten verpresst und bei 80°C in einem HORO-Umluftofen gealtert. Zweimal pro Woche werden Proben entnommen, von denen a) die Mooneyviskosität gemessen [ASTM D 1646] und b) der Gelgehalt (unlöslicher Kautschukanteil) bei Raumtemperatur in Toluol bestimmt wird. Als Wirkungskriterium wird die Zeit in Tagen bestimmt, bei der die Mooneyviskosität um 15 Punkte angestiegen ist bzw. der Gelgehalt 5% überschritten hat.

2) Parallel dazu wird der getrocknete Latex in einem Brabender Plasti-Corder 30 Minuten bei 160°C und einer Rotordrehzahl von 60 U/Min. gealtert. Es wird die Zeit bestimmt, bei der das Drehmoment nach Durchlaufen des Minimums um 100 Meterpond angestiegen ist (Induktionszeit). Weiterhin wird der Gelgehalt nach der Alterung ermittelt und die Verfärbung des Kautschuks (Yellownessindex von 2 mm Pressplatten nach ASTM D 1925-70) bestimmt.

Die Prüfungsergebnisse sind in Tabelle 4 aufgeführt.

Tabelle 4

| Stabilisator gemäss | Konzentration in % * | Ofen 80°C | | | Brabender 160°C, 60 U/Min. während 30 Min. | | |
|---|---|---|---|---|---|---|---|
| | | Anstieg der Mooneyviskosität nach 7 | 24 Tagen | Anzahl Tage bis Gelgehalt ≥ 5% | Induktionszeit in Min. | Gelgehalt in % | YI |
| Beispiel 1 | 0,2 | 54 | 67 | 25 | 18,5 | 31 | 75 |

* bezogen auf den Latexgehalt

Patentansprüche

1. Mono- und dialkylierte Diphenylamine der Formel I

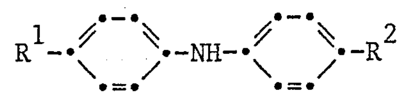

(I),

worin $R^1$ verzweigtes Dodecyl und $R^2$ Wasserstoff oder verzweigtes $C_3$-$C_{12}$ Alkyl bedeuten.

2. Diphenylamine der Formel I gemäss Anspruch 1, worin $R^2$ Wasserstoff oder verzweigtes Butyl, Octyl, Nonyl oder Dodecyl darstellt.

3. Diphenylamine der Formel I gemäss Anspruch 1, worin $R^2$ Wasserstoff oder verzweigtes Dodecyl darstellt.

4. Gemische der Diphenylamine der Formel I gemäss Anspruch 1, dadurch gekennzeichnet, dass die Gemische etwa 10 bis 90 Gew.-prozent der mono- bzw. 90 bis 10 Gew.-prozent der dialkylierten Diphenylamine der Formel I enthalten.

5. Verfahren zur Herstellung der mono- und dialkylierten Diphenylamine der Formel I nach Anspruch 1, dadurch gekennzeichnet, dass man Diphenylamin mit Dodecen und anschliessend mit $C_3$-$C_{12}$ Alken in Gegenwart eines Friedel-Crafts-Katalysators oder einer Säure in einem Temperaturbereich von 20°C bis zu 300°C umsetzt.

6. Verfahren gemäss Anspruch 5, dadurch gekennzeichnet, dass sowohl Dodecen als auch $C_3$-$C_{12}$ Alken in einem Mengenverhältnis zu Diphenylamin von mindestens zwei- bis dreifachem molarem Ueberschuss eingesetzt wird.

7. Verfahren zur Herstellung der mono- und dialkylierten Diphenylamine der Formel I nach Anspruch 3, dadurch gekennzeichnet, dass man Diphenylamin mit Dodecen in Gegenwart eines Friedel-Crafts-Katalysators oder einer Säure in einem Temperaturbereich von 20°C bis 300°C umsetzt.

8. Verfahren gemäss Anspruch 5, dadurch gekennzeichnet, dass die Umsetzung in einem Temperaturbereich von 110° bis zu 190°C durchgeführt wird.

9. Stoffzusammensetzungen enthaltend eine Verbindung der Formel I gemäss Anspruch 1 und einen Schmierstoff oder ein Elastomer.

10. Stoffzusammensetzungen enthaltend ein Gemisch der Verbindungen der Formel I gemäss Anspruch 4 und einen Schmierstoff oder ein Elastomer.

11. Stoffzusammensetzungen gemäss Anspruch 10, dadurch gekennzeichnet, dass der Schmierstoff ein mineralisches und/oder synthetisches Schmieröl oder Schmierfett ist.

12. Verwendung der Verbindungen der Formel I sowie deren Gemische gemäss Anspruch 1 als Schmierstoffadditive.

13. Verwendung der Verbindungen der Formel I sowie deren Gemische gemäss Anspruch 1 als Elastomerenadditive.